# EUROPEAN PATENT APPLICATION

(11) **EP 1 106 541 A1**
(43) Date of publication of application: **13.06.2001**
(21) Application number: 00125399.6
(22) Date of filing: 04.12.2000
(51) Int. Cl.: B65G 35/06, B65G 37/02

(54) **Carriage conveying apparatus**

(30) Priority: 02.12.1999 JP 34314099
(71) Applicant: Sumitomo Wiring Systems, Ltd., Yokkaichi-City, Mie, 510-8503 (JP)
(72) Inventor: Ito, Akira, Yokkaichi-City, Mie, 510-8503 (JP); Kato, Hajime, Yokkaichi-City, Mie, 510-8503 (JP); Kurihara, Kiyokazu, 1-14 Nishisuehiro-cho Yokkaichi-ken, Mie (JP)
(74) Representative: Müller-Boré & Partner Patentanwälte

(57) **Abstract**

[Object]

To efficiently circulate push carriages 110 even in a limited space.

[Solution]

Forward and return paths PH1, PH2 for push carriages 110 are provided. The return path PH2 is provided immediately below the forward path PH1. The push carriages 110 are made transferable from one to the other of the paths PH1, PH2 by a pair of elevated conveyors 120, 140. In addition, the return path PH2 is inclined so that the push carriages 110 return from an upstream side of the return path PH2 to a downstream side thereof by the action of gravity.

[Selected Figure]

## Description

The present invention relates to a carriage conveying apparatus and, particularly to an elevated carriage conveying apparatus for moving push carriages conveyed by operators from one work station to another.

Generally, work boards, so-called "wire laying boards", are used to produce wiring harnesses. As a means to move the wire laying boards, carriages circulating on a conveyance path of an endless conveyor are utilized. Some kinds of wire laying boards are placed on push carriages, which are conveyed by hand and are circulated from one work station to another.

A carriage conveying apparatus using the aforementioned push carriages needs to be installed in a relatively concentrated layout and the individual carriages need to be circulated in a very limited space. However, an inexpensive conveying apparatus which can circulate push carriages in a small space has not been developed up to the present. Thus, in the case that such a carriage conveying apparatus is used by being connected with a main conveyor for, e.g. assembling a plurality of sub-modules into a wiring harness, the connected conveying apparatus takes up a large space, disadvantageously enlarging a work line.

In view of the above problem, an object of the present invention is to provide an inexpensive carriage conveying apparatus which can efficiently circulate carriages, in particular push carriages even in a limited space.

This object is solved according to the invention by a carriage conveying apparatus according to claim 1. Preferred embodiments are subject of the dependent claims.

According to the invention, there is provided a carriage conveying apparatus, comprising:
a forward path for substantially linearly moving carriages from one work station to another, and
a return path for moving the carriages from a downstream end of the forward path to an upstream end thereof,
wherein the return path is provided immediately below the forward path, the two paths are connected by a pair of conveyors or elevators so that the carriages can be transferred from one to the other of the two paths.

Since the return path for circulating the carriages is formed immediately below the forward path for conveying them from one work station to another in this invention, a circulating path compact in plan view can be constructed. Even in the case that this elevated carriage conveying apparatus is connected with a main conveyor in a branched manner to construct a production line, it can be installed in a maximally concentrated layout.

According to a preferred embodiment of the invention, the return path is inclined such that the carriages return from an upstream side of the return path to a downstream side thereof at least partly by the action of gravity.

Preferably, the carriages are conveyed from the upstream end of the forward path to the downstream end thereof by being pushed by the operators.

According to a preferred embodiment, there is provided an elevated carriage conveying apparatus, comprising:
a forward path for linearly moving push carriages manually conveyed by operators from one work station to another, and
a return path for moving the carriages from a downstream end of the forward path to an upstream end thereof,
the carriages being conveyed from the upstream end of the forward path to the downstream end thereof by being pushed by the operators,
wherein the return path is provided immediately below the forward path, the two paths are connected by a pair of elevated conveyors so that the carriages can be transferred from one to the other of the two paths, and the return path is inclined such that the carriages return from an upstream side of the return path to a downstream side thereof by the action of gravity.

Since the return path is preferably so inclined as to return the carriages by the action of gravity, the carriages on the return path can be automatically returned to the upstream side of the forward path without any consideration and without using any special driving source.

Preferably, the pair of conveyors comprise:
elevating tables elevated and lowered between upper transfer positions where the carriages can be transferred from and to the forward path and lower transfer positions where the carriages can be transferred from and to the return path and
driving units for elevating and lowering the elevating tables between the upper and lower transfer positions.

Further preferably, the carriage conveying further comprises one or more position detecting means for detecting elevated and/or lowered positions of the elevating tables in the corresponding transfer positions, and
a control unit for controlling operations of the driving units in accordance with signals from the position detecting means.

Most preferably, the control unit permits the elevating table provided at the upstream side of the return path to be lowered only when the elevating table provided at the downstream side of the return path is located in the lower transfer position.

Particularly, the pair of elevated conveyors preferably comprise:
elevating tables elevated and lowered between upper transfer positions where the carriages are transferred from and to the forward path and lower transfer positions where the carriages are transferred from and to the return path,
position detecting means for detecting elevated and lowered positions of the elevating tables in the corresponding transfer positions,
driving units for elevating and lowering the elevating tables between the upper and lower transfer positions, and
a control unit for controlling operations of the driving units in accordance with signals from the position detecting means,
wherein the control unit permits the elevating table provided at the upstream side of the return path to be lowered only when the elevating table provided at the downstream side of the return path is located in the lower transfer position.

With such (elevated) conveyors, the carriages can be securely transferred from the downstream end of the return path to the elevating table even if they are conveyed from the upstream side to the downstream side of the return path by the action of gravity.

Preferably, carriage detection sensors for detecting the presence of the carriage are provided in the upper and lower transfer positions of the respective elevated conveyors and connected with the control unit such that detection signals can be inputted to the control unit.

In such a case, the control unit can execute a more precise control.

Further preferably, each driving unit comprises a parallel link or pantograph system for supporting the elevating table such that the elevating table can be elevated and lowered, and preferably a single air cylinder for driving the parallel link.

With such a driving unit, each elevating table can be elevated and lowered between the upper and lower transfer positions by the single air cylinder.

Most preferably, the conveyors comprise temporary holding for temporarily or releasably holding or locking the carriage positioned thereon substantially during the transfer from one to the other of the two paths.

These and other objects, features and advantages of the present invention will become apparent upon reading of the following detailed description of preferred embodiments and accompanying drawings in which:
FIG. 1 is a schematic plan view of an elevated carriage conveying apparatus according to one embodiment of the invention,
FIG. 2 is a perspective view schematically showing the schematic construction of the elevated carriage conveying apparatus of FIG. 1,
FIG. 3 is a perspective view of a push carriage used in the elevated carriage conveying apparatus of FIG. 1,
FIGS. 4 to 7 are perspective views showing the schematic construction of a forwarding elevated conveyor for transferring a received push carriage from the downstream end of a return path to the upstream end of a forward path,
FIG. 8 is a perspective view partly cut away showing a portion of an elevating table of the elevated conveyor of FIG. 5,
FIG. 9 is a diagram showing an operation of a reverse movement preventing mechanism shown in FIG. 8,
FIGS. 10 and 11 are perspective views showing the schematic construction of a returning elevated conveyor,
FIG. 12 is a perspective view enlargedly showing a portion of the elevated conveyor of FIG. 10,
FIGS. 13 and 14 are diagrams schematically showing an operation of the elevated conveyor of FIG. 10,
FIG. 15 is a block diagram showing a control unit of the embodiment of FIG. 1, and
FIG. 16 is a timing chart of the aforementioned embodiment.

Hereinafter, a preferred embodiment of the invention is described with reference to the accompanying drawings.

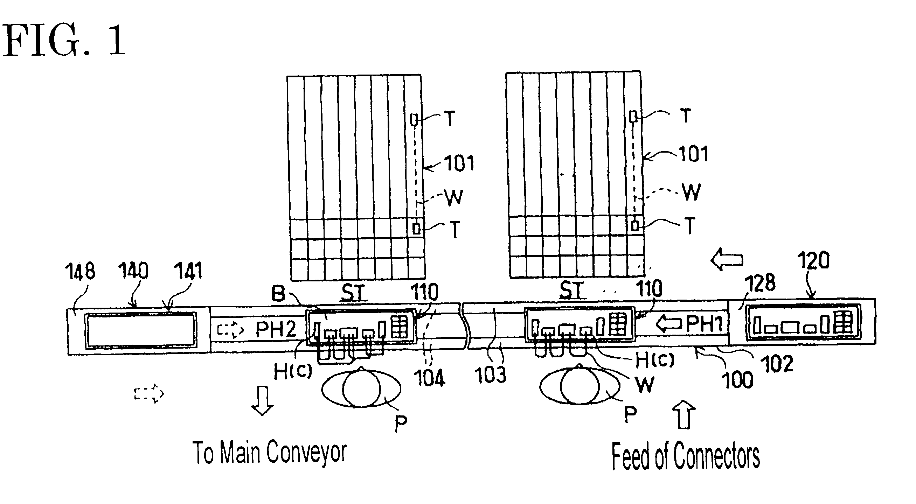

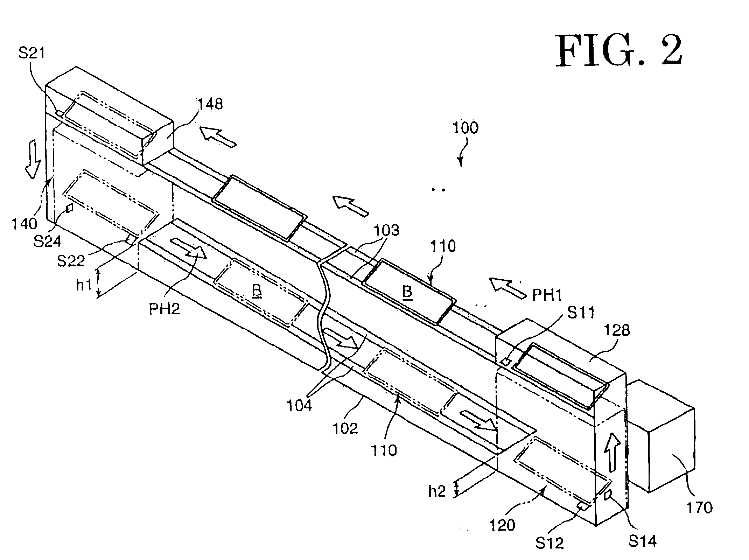

FIG. 1 is a schematic plan view of a carriage conveying apparatus or mechanism or an elevated carriage conveying apparatus 100 according to one preferred embodiment of the invention, and FIG. 2 is a perspective view schematically showing a schematic construction of the elevated carriage conveying apparatus 100 of FIG. 1.

First, with reference to FIG. 1, the carriage conveying apparatus 100 is adapted to substantially linearly move push or movable carriages 110 from one work station ST to another to apply a specified (predetermined or predeterminable) processing at each work station ST. In the shown example, a stocking table 101 for stoking sorted wires W having specified lengths and terminals T connected with both ends thereof is provided for each work station ST, and a wire laying board B on which a plurality of connector holders H for holding connectors C are arranged is carried by each push carriage 110. A specified submodule (wiring harness) is to be formed by successively inserting the wires W into the corresponding connectors C at the respective work stations ST. Even though the following description is given with respect to push carriages 110, it is to be understood that also any other kind of carriage or moving means being driven or having an internal driving means may be used instead or additionally.

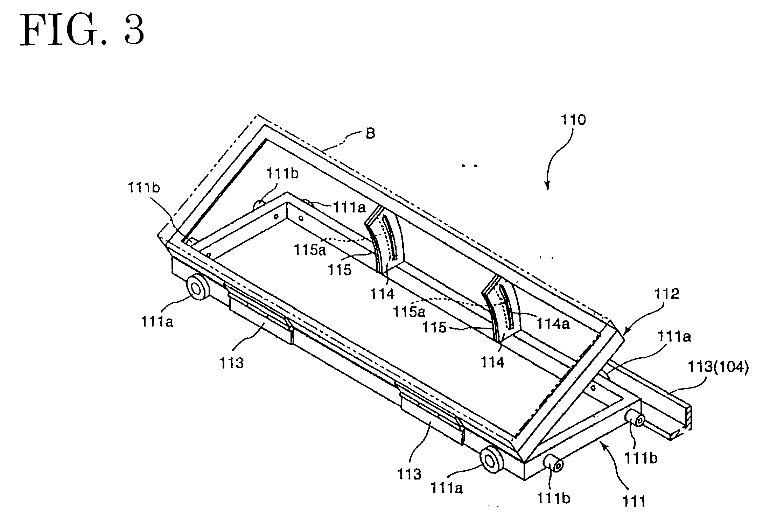

Next, with reference to FIG. 2, the elevated carriage conveying apparatus 100 according to the shown embodiment has a frame 102 preferably forming an entire outer configuration. The frame 102 is formed e.g. by assembling a plurality of angles or brackets substantially into a box extending along a forward path PH1 e.g. by welding. On top of the frame 102 is formed the forward path PH1 for moving the carriages 110 from one work station ST to another along rails 103 (see FIG. 3) preferably formed by substantially L-shaped angles or brackets.

In a bottom part of the frame 102, a return path PH2 is formed or substantially defined by rails 104. The return path PH2 is provided substantially immediately below the forward path PH1 for returning the push carriages 110 having reached a downstream end of the forward path PH1 to an upstream end or end portion of the forward path PH1. A pair of elevators or elevated or elevating conveyors 120, 140 are provided preferably at the substantially opposite sides of the paths PH1, PH2. The push carriages 110 are or can be conveyed or moved or elevated from one path PH1 (PH2) to the other path PH2 (PH1) by the elevated conveyors 120, 140, thereby constructing an endless conveyor as a whole. In the shown embodiment, the rails 104 forming the return path PH2 are preferably inclined by setting a height H1 at the upstream end larger than a height H2 at the downstream end, so that the push carriages 110 can return from the upstream end to the downstream end by the action of gravity as described later.

Next, with reference to FIG. 3, the shown elevated carriage conveying apparatus 100 is described in detail. FIG. 3 is a perspective view of the push carriage 110 of the carriage conveying apparatus 100 of FIG. 1. With reference to FIG. 3, the push carriage 110 includes a frame-shaped base 111 and a board frame 112 supported on the base 111.

The base 111 is formed e.g. by welding pipes to have a substantially rectangular shape in plan view, and rollers 111a are mounted on its longer side surfaces (only one side is shown in FIG. 3). The base 111 is horizontally movable by rolling the rollers 111a on the rails 103 (or rails 104). A pair of elastic stoppers, preferably of rubber stoppers 111b are mounted on each of shorter side surfaces of the base 111.

The board frame 112 is adapted to hold the wire laying board B shown in phantom line, and is assembled e.g. by welding angles or brackets to have the substantially same shape in plan view as the base 111. The board frame 112 and the base 111 are coupled by a pair of hinges 113 provided at one side thereof, so that the board frame 112 can be inclined downward toward an operator. Further, pairs of mounting plates 114, 115 are so affixed or welded at the other side of the base 111 and the board frame 112 as to cantilever or project. The mounting plates 114 mounted on the base 111 and the mounting plates 115 mounted on the board frame 112 are provided in such positions where they can be substantially joined together. In the respective mounting plates 114, 115 are formed oblong holes 114a, 115a extending along an arc substantially centered on a center of rotation of the hinges 113. The board frame 112 and the base 111 can be assembled with the board frame 112 inclined by a specified angle by joining or fixedly connecting the mounting plates 114, 115 together or relative to each other preferably by means of unillustrated bolts inserted through the oblong holes 114a, 115a and nuts. In other words, an angle of inclination of the board frame 112 can be adjusted by changing a position of joining the mounting plates 114, 115 together along the extension of the oblong holes 114a, 115a.

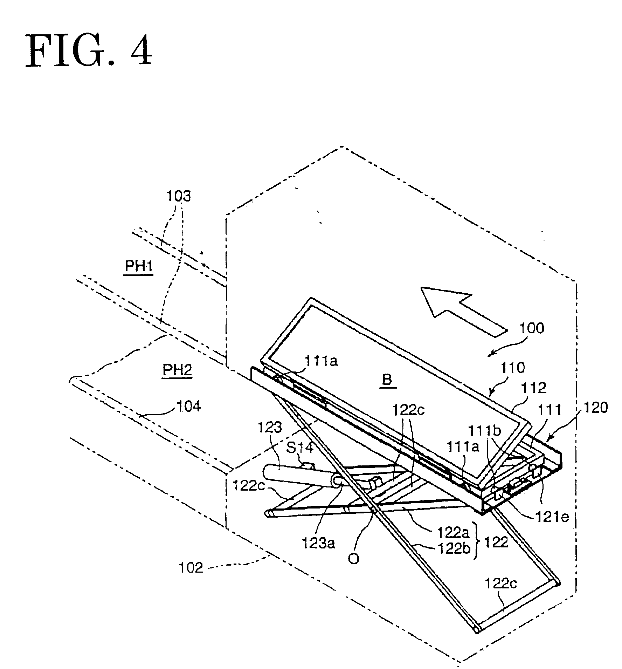

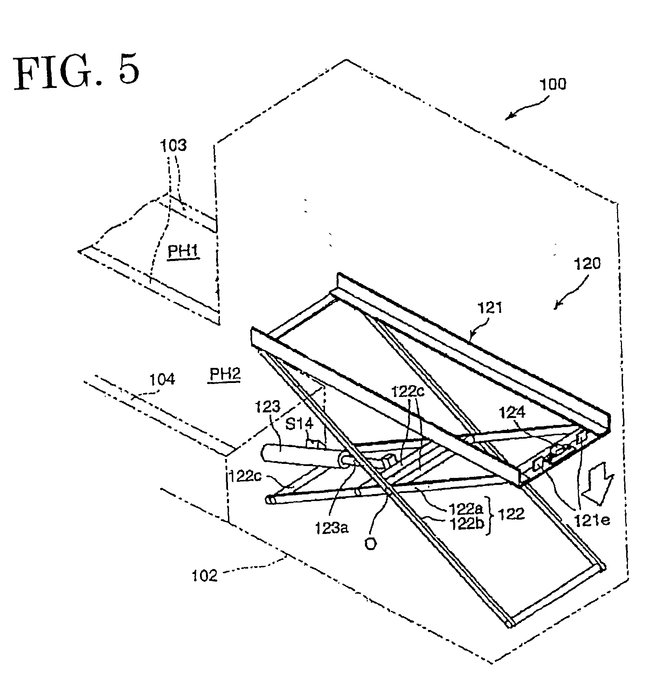

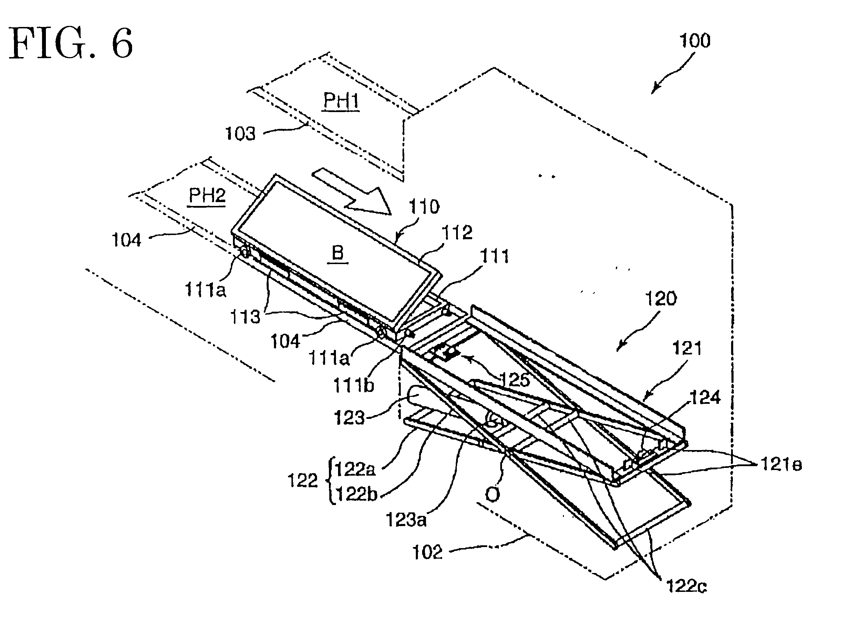

FIGS. 4 to 7 are perspective views showing the schematic construction of the forwarding elevating or elevated conveyor 120 for transferring the carriages 110 from the downstream end of the return path PH2 to the upstream end of the forward path PH1. With reference to FIGS. 4 to 7, the elevated conveyor 120 includes a preferably substantially rectangular elevating table 121 which upon use or in operation is substantially vertically opposed to the push carriage 110, a parallel link 122 for linking the elevating table 121 and the push carriage 110, and an air cylinder 123 as an actuator for moving the elevating table 121 upward and downward or between the forward and return paths PH1, PH2. The elevating table 121 is preferably a frame member formed by assembling angles. The parallel link 122 is constructed as a pantograph system preferably by connecting intermediate positions of two pairs of link arms 122a, 122b assembled to have an X-shape in front view by a connecting shaft 122c extending in widthwise direction. The link arms 122a, 122b are coupled such that, for example, ends at the downstream end of the return path PH2 are fixed while ends at the upstream end of the forward path PH1 are substantially vertically slidable with an intersection ○ thereof as a center. Thus, the elevating table 121 can be smoothly moved upward and downward between an upper transfer position (see FIGS. 4 and 5) where the push carriage 110 is or can be transferred to the upstream end of the forward path PH1 and a lower transfer position (see FIG. 6) where the push carriage 110 is transferred from the downstream end of the return path PH2.

The air cylinder 123 is preferably fixed while obliquely extending with respect to the frame 102, and a rod 123a thereof is coupled to a movable side of the parallel link 122. Thus, the elevating table 121 is raised by the air cylinder 123 extending the rod 123a while being lowered by the air cylinder 123 contracting the rod 123a.

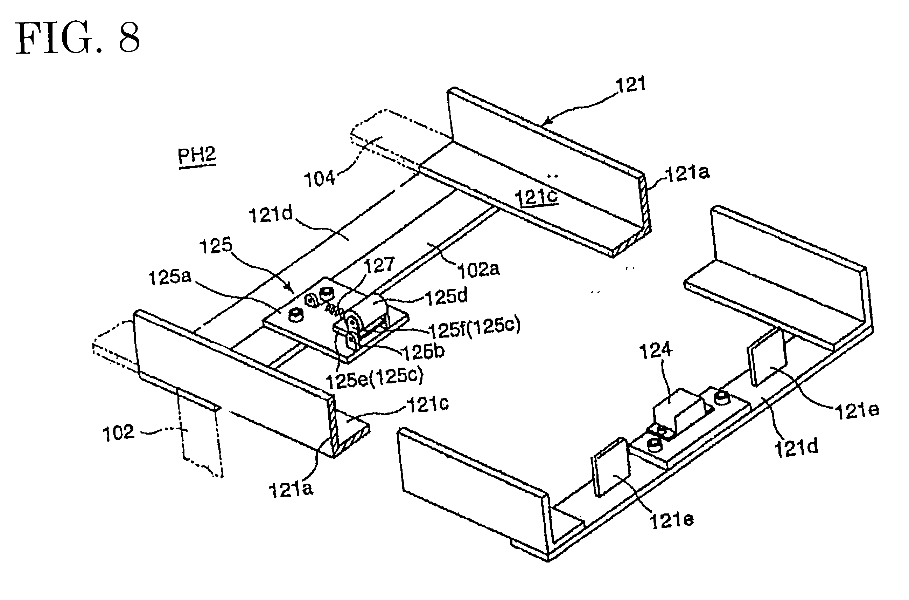

FIG. 8 is a perspective view partly cut away showing a portion of the elevating table 121 of the elevated conveyor shown in FIGS. 4 to 7. As shown in FIG. 8, the longer sides of the elevating table 121 are formed by substantially symmetrically arranging a pair of L-shaped angles or brackets 121a to substantially face each other, and ends are formed by welding flat angles or brackets 121d to the lower surfaces of the angles 121a.

The rails 121c formed by the L-shaped angles 121a are substantially in flush with the upper surfaces of the corresponding rails 103, 104 in the respective transfer positions, so that the push carriages 110 can be smoothly transferred (or received).

Contact plates 121e corresponding to the rubber stoppers 111b of the push carriage 110 stand on the flat angle 121d located distant from the paths PH1, PH2, and a magnet 124 for attracting the base 111 of the push carriage 110 is provided therebetween. Thus, the elevating table 121 can detachably lock the push carriage 110 transferred thereonto. In the shown example, the frame 102 is provided with a reverse movement preventing mechanism 125 in order to prevent the push carriage 110 transferred onto the elevating table 121 from the return path PH2 from moving in a reverse direction.

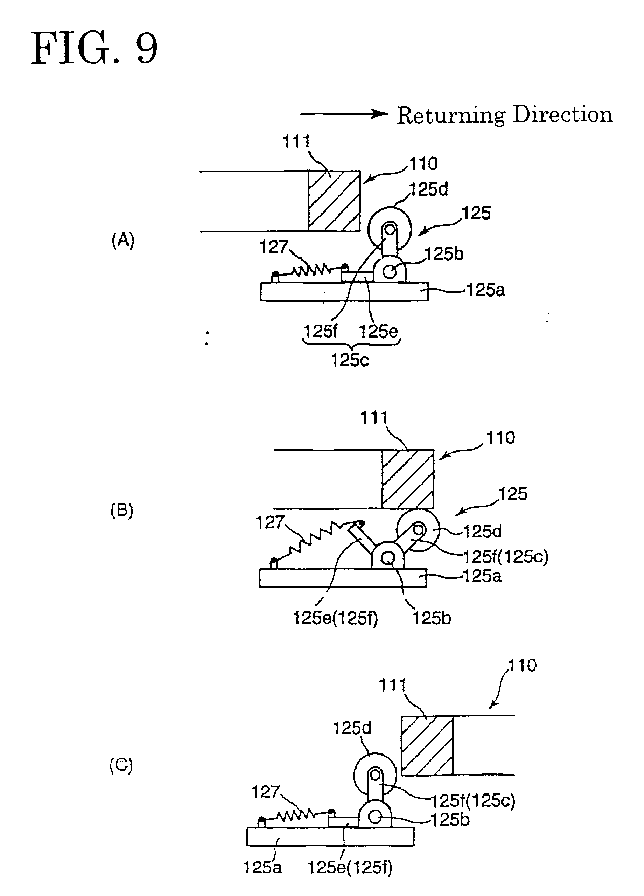

FIG. 9 is a diagram showing an operation of the reverse movement preventing mechanism 125 shown in FIG. 8.

As shown in FIGS. 8 and 9, the reverse movement preventing mechanism 125 is provided with a base 125a secured to the flat angle 102a of the frame 102 closer to the paths PH1, PH2, a pivot 125b rotatably supported on the base 125a along a horizontal direction substantially perpendicular to a returning direction, and a roller arm 125c pivotally supported via the pivot 125b, and a stopper roller 125d rotatably supported on the roller arm 125c.

As shown in FIG. 9, the roller arm 125c is substantially L-shaped and comprised of a bottom plate 125e placed at an angle different from 0° or 180°, preferably substantially normally placed on the base 125a and an arm portion 125f integrally standing on the bottom plate 125e. The arm portion 125f is provided at the downstream end of the bottom plate 125e with respect to a direction (returning direction) in which the push carriage 110 is guided onto the elevating table 121 from the return path PH2, and the stopper roller 125d is rotatably supported at the upper end thereof.

A tension coil spring 127 as a biasing means having one end fixed to the base 125a is mounted at the upstream end of the bottom plate 125e with respect to the returning direction, and the roller arm 125c is biased in a direction to stand on the base 125a by the spring 127.

The stopper roller 125d is located in a contact position where it is in contact with the downstream end face of the push carriage 110 (i.e. on the upstream end of the return path PH2 thereof) when the roller arm 125c is standing while being lowered to permit passage of the push carriage 110 when the roller arm 125c is rotated against a biasing force of the tension coil spring 127.

When the push carriage 110 is moved in the returning direction to contact the stopper roller 125d as shown in FIG. 9(A), the roller arm 125c is rotated clockwise to permit the push carriage 110 to be guided onto the elevating table 121 as shown in FIG. 9(B). After the push carriage 110 is guided onto the elevating table 121, the stopper roller 125d is engaged with the downstream end face of the push carriage 110 with respect to the returning direction as shown in FIG. 9(C), thereby preventing the push carriage 110 from moving in a direction opposite from the returning direction.

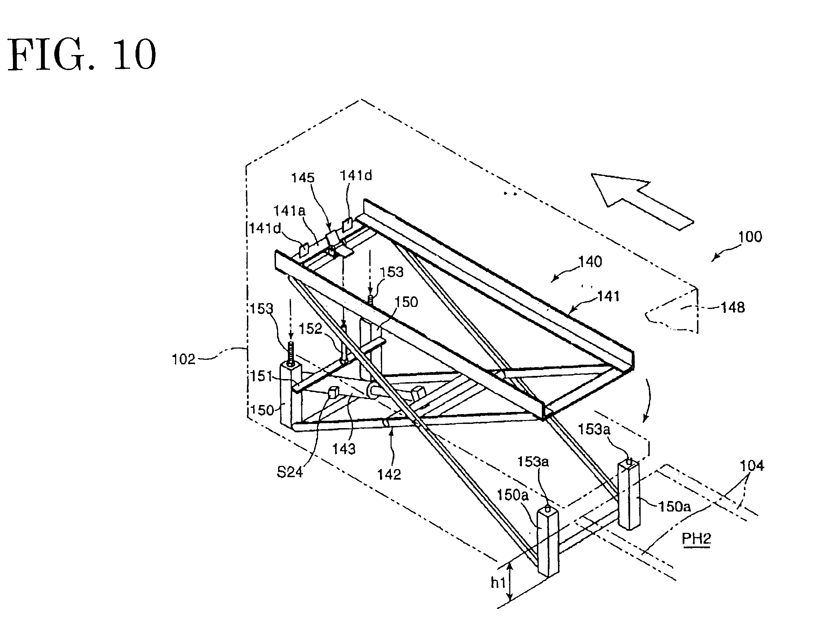

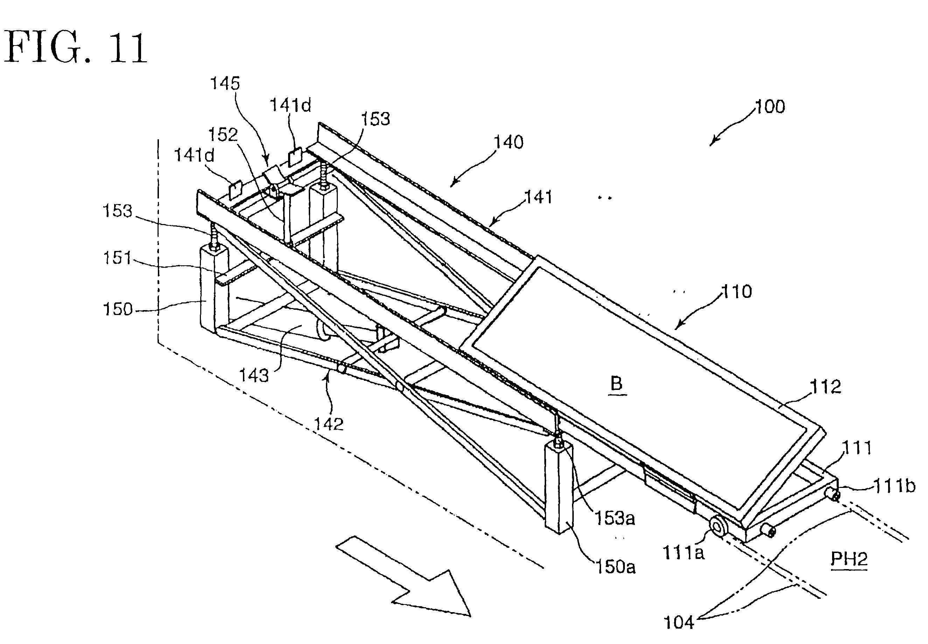

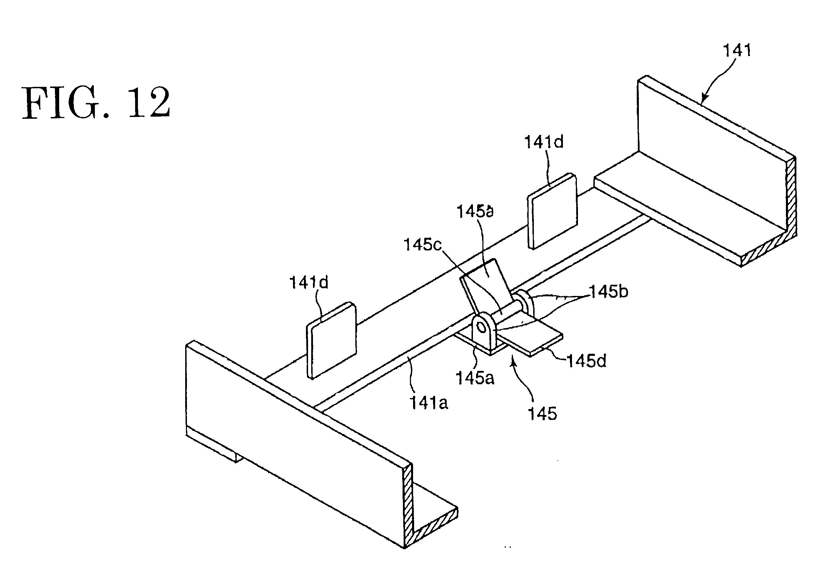

Next, with reference to FIGS. 10 to 14, the returning or elevating elevated conveyor (or elevator) 140 is described in detail. FIGS. 10 and 11 are perspective views showing the schematic construction of the elevated conveyor 140, FIG. 12 is a perspective view enlargedly showing a portion of the elevated conveyor 140 of FIG. 10, and FIGS. 13 and 14 are diagrams schematically showing the operation of the elevated conveyor 140 of FIG. 10.

The returning elevated conveyor 140 includes, in principle, an elevating table 141, a parallel link 142, an air cylinder 143 and the like similar to the forwarding elevated conveyors 120. The elevating table 141 can be smoothly moved upward and downward between an upper transfer position (see FIG. 10) where the push carriage 110 is transferred from the downstream end of the forward path PH1 and a lower transfer position (see FIG. 11) where the push carriage 110 is transferred to the upstream end of the return path PH2. In other words, the push carriages 110 move over the forward path PH1, where preferably assembling or mounting operations (e.g. wire-laying, bundling and/or connecting operations) are performed, then reach a first elevating table 141, which transfers the push carriages 110 from (the downstream end of) the forward path PH1 to (the upstream end of) the return path PH2, where they can return back in a direction preferably substantially opposed to the direction of movement on the forward path PH1, so as to reach a second elevating table 121 arranged at the downstream end or side of the return path PH2, which transfers the push carriages 110 again back to (the upstream end of) the forward path PH1. Accordingly, the push carriages 110 can be circulated over the forward path PH1, the first elevating table 121, the return path PH2 and the second elevating table 121 in this order. Thus, it is advantageously possible to cycle the push carriages 110 on the forward path PH1 by returning them, once they have reached the one side end or downstream end of the forward path PH1, to the beginning or upstream end of the forward path PH1 via the second elevating table 121, the return path PH2 (being preferably arranged substantially below the forward path PH1) and the second elevating table 121.

In the elevating table 141 shown in FIG. 10, contact plates 141d corresponding to the rubber stoppers 111b (see FIG. 11) of the push carriage 110 stand on a flat angle or bracket 141a located distant from the paths PH1, PH2. Further, a turning plate mechanism 145 for holding the base 111 of the push carriage 110 in cooperation with the contact plates 141d is provided between the contact plates 141d or on the flat angle 141a.

As enlargedly shown in FIG. 12, the turning plate mechanism 145 includes a base 145a fixed to the flat angle 141a, bearings 145b standing on the base 145a, a pivot 145c rotatably or pivotably supported by the bearings 145b in a substantially horizontal direction perpendicular to the forward path PH1, and two plates 145d, 145e welded to the pivot 145c.

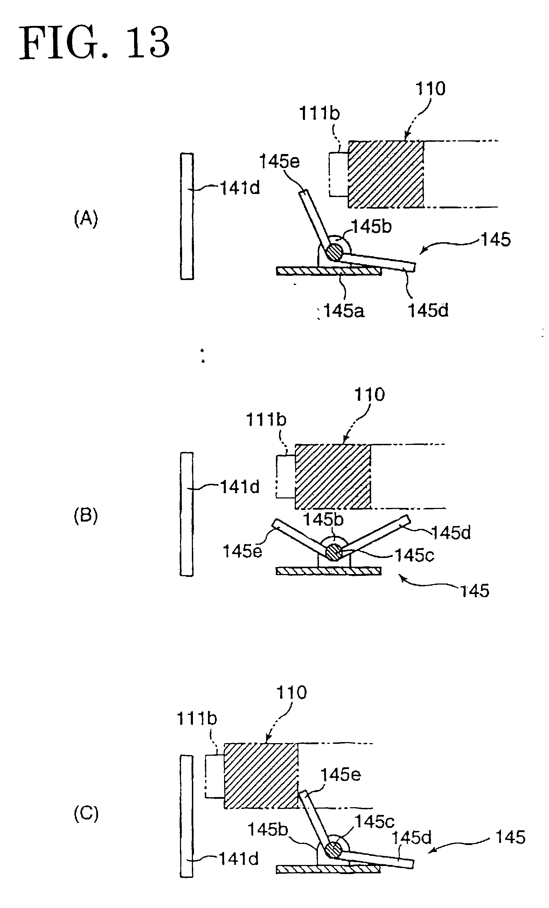

The plates 145d, 145e radially extend while being spaced apart by a specified phase or angle different from 0° or 180° about the pivot 145c. One plate 145d is displaceable between a position where it is or can come in contact with an end of the base 145a by the action of gravity and a leading end portion thereof projects from the end of the base 145a and a position where it is spaced apart from the end of the base 145a. The other plate 145e extends obliquely to face an end face of the push carriage 110 when the one plate 145d is in contact with the base 145a while being retracted below the push carriage 110 when the one plate 145d is spaced apart from the end of the base 145a. As a result, when the push carriage 110 is guided from the forward path PH1 as shown in FIG. 13(A), the other plate 145e is pushed to rotate or pivot by the push carriage 110, thereby permitting the push carriage 110 to move in the forward direction until the rubber stoppers 111b (see FIG. 3) of the push carriage 110 come into contact with the corresponding contact plates 141d. After reaching this state, the plates 145d, 145e are left in their free states in the base 111 of the push carriage 110, and the one plate 145d returns to the position to contact the base 145a again by the action of gravity, whereas the other plate 145e faces the rectangular pipe of the base 111 of the push carriage 110 as shown in FIG. 13(C) to prevent the push carriage 110 from moving in a reverse direction. Alternatively or additionally, a biasing means such as a spring may be provided to replace or sustain the action of gravity.

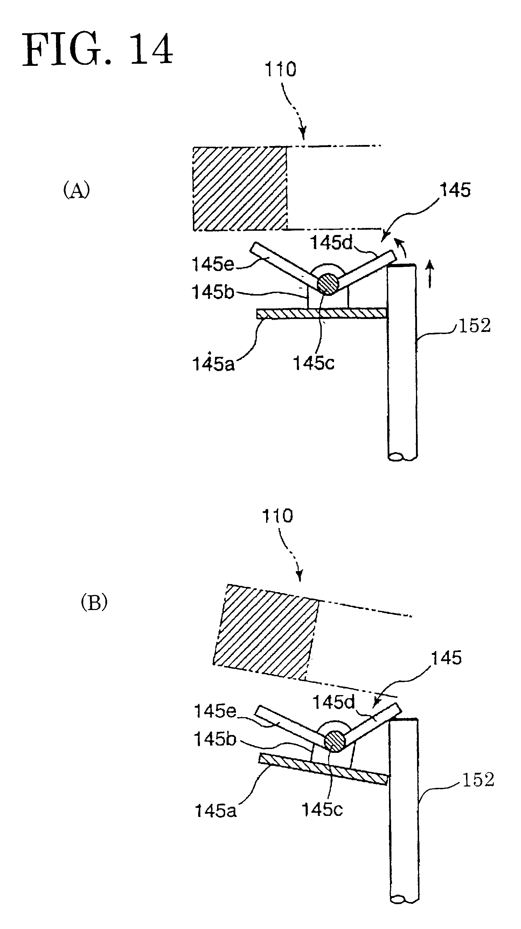

With reference to FIG. 10, a rod 152 stands on an angle or bracket 151 substantially horizontally extending between a pair of pillars 150 in the frame 102 in order to release locking of the push carriage 110 by the turning plate mechanism 145. The rod 152 is provided immediately below a free end of the one plate 145d in contact with the base 145a of the turning plate mechanism 145, and pushes the one plate 145d up as shown in FIG. 14(A) while the elevating table 141 is being lowered, thereby releasing locking of the push carriage 110 by the turning plate mechanism 145.

Further, as shown in FIG. 10, bolts as contact bars 153 stand on the pair of pillars 150. These contact bars 153 come into contact with the downstream end of the elevating table 141 with respect to the forward direction so as to incline the lowered elevating table 141 as shown in FIG. 14(B). As a result, the push carriage 110 on the inclined elevating table 141 moves onto the rails 104 on the return path PH2 preferably by the action of gravity, and moves further to the forwarding elevated conveyor 120. In the shown example, a pair of pillars 150a are provided at a side opposite from the above pair of pillars 150, and contact bars 153a for height adjustment are provided on top of the pillars 150a to adjust the above inclination.

With reference to FIG. 2, the aforementioned elevated conveyors 120, 140 are provided with upper presence sensors S11, S21 for detecting the presence of the push carriage 110 in the upper transfer positions and lower presence sensors S12, S22 for detecting it in the lower transfer positions. Although not shown in detail, elevated position sensors S14 (see FIG. 5) and S24 (see FIG. 10) for detecting in which of the upper and lower transfer positions the respective elevating tables 121, 141 are located depending on the driven states of the respective cylinders 123, 143 are provided. Identified by 128, 148 in FIG. 2 are safety covers for substantially covering the push carriages 110 in the upper transfer positions.

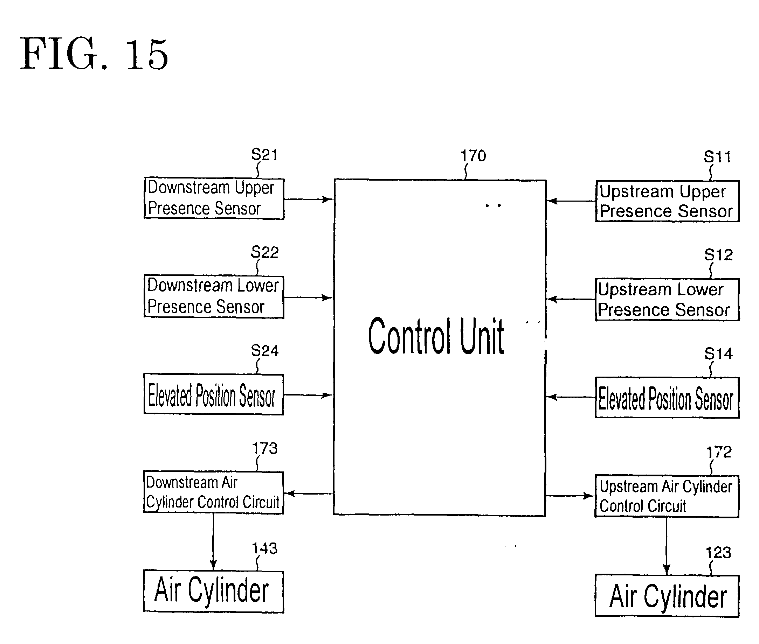

FIG. 15 is a block diagram showing a control unit of the embodiment shown in FIG. 1.

With reference to FIGS. 2 and 15, the carriage conveying apparatus 100 is provided with a control unit 170 for controlling operation timings of the respective elevated conveyors 120, 140. The control unit 170 is comprised of a microprocessor or like electronic device, and detection signals from the respective sensors S11, S21, S12, S22, S14, S24 are or can be inputted thereto. Further, the control unit 170 can control pressurized air supplying circuits 172, 173 for supplying a pressurized air to the air cylinders 123, 143.

Next, how the aforementioned embodiment operates is described.

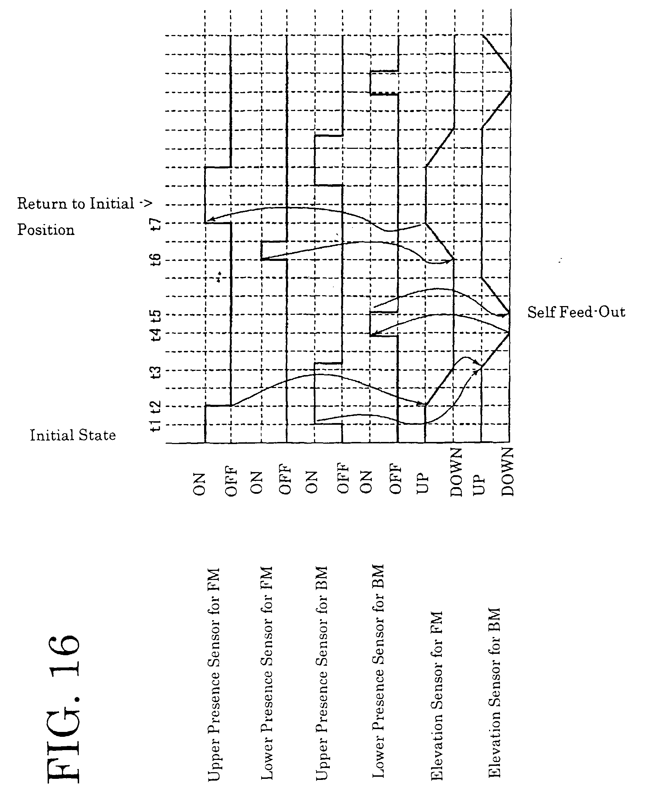

FIG. 16 is a timing chart of the aforementioned embodiment.

With reference to FIGS. 1 and 16, in an initial state of the operation (hereinafter, "initial state"), the elevating tables 121, 141 of the respective elevated conveyors 120, 140 are located in the upper transfer positions (see FIGS. 4 and 10), and a plurality of push carriages 110 are placed only on the rails 103 on the forward path PH1. In the initial state, one push carriage 110 is still on the elevating table 121 of the forwarding elevated conveyor 120 (see FIG. 4), whereas the returning elevated conveyor 140 is empty (see FIG. 10).

Operators P start the operation in this state, and the push carriage 110 at the downstream end of the forward path PH1 is first transferred onto the elevating table 141 of the returning elevated conveyor 140 by successively conveying the push carriages 110 standing in front of the respective work stations ST to the downstream side (see t1 of FIG. 16). The transferred push carriage 110 is (temporarily) locked or positioned on or fixed to the elevating table 141 by the turning plate mechanism 145 in the aforementioned procedure of FIGS. 13(A) to 13(C) and detected by the upper presence sensor S21 provided in the returning elevated conveyor 140. At this stage, the control unit 170 waits without driving the returning elevated conveyor 140 until the elevating table 121 of the forwarding elevated conveyor 120 is displaced to the lower transfer position.

On the other hand, when the push carriage 110 on the forwarding elevated conveyor 120 is sent out onto the rails 103 of the forward path PH1, the upper presence sensor S11 detects it (see t2 of FIG. 16). Then, the control unit 170 drives the air cylinder 123 to lower the elevating table 121. Thus, the elevating table 121 is lowered to the lower transfer position to wait on standby so as to receive the returning push carriage 110. The control unit 170 lowers the returning elevating table 141 (see t3 of FIG. 16) when the forwarding elevated conveyor 120 is lowered to the lower transfer position and the push carriage 110 is present in the upper transfer position of the returning elevated conveyor 140.

By this lowering operation, locking by the turning plate mechanism 145 is first released and the elevating table 141 is then inclined as described with reference to FIGS. 14(A) and 14(B). By this inclination, the push carriage 110 is sent out onto the rails 104 of the return path PH2 by the action of gravity as shown in FIG. 11 and further moves to the downstream end of the rails 104 (see t4 to t5 of FIG. 16). Alternatively or additionally, the carriages 110 may be moved on the return path PH2 by a driving means such as a motor, a chain sprocket combination or the like. After the push carriage 110 is sent out and detected by the lower presence sensor S22, the elevating table 141 is immediately returned to the upper transfer position (see t5 of FIG. 16).

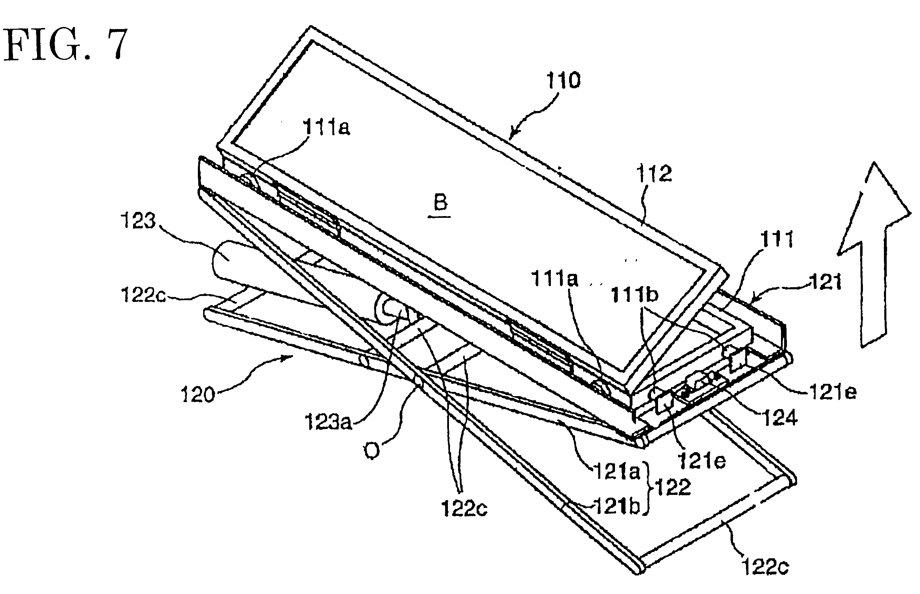

The returned push carriage 110 is guided onto the elevating table 121 of the forwarding elevated conveyor 120 waiting in the lower transfer position as shown in FIG. 6. Then, the push carriage 110 is (preferably temporarily) locked or fixedly positioned on the elevating table 121 (see FIG. 7) in the procedure described with reference to FIGS. 9(A) to 9(C), and detected by the lower presence sensor S12 (see t6 of FIG. 16).

Thereafter, the control unit 170 raises the elevating table 121 upon receipt of a detection signal of the lower presence sensor S12. Therefore, the elevated conveyor 120 returns to the state of FIG. 5 while carrying the push carriage 110 as shown in FIG. 7, with the result that the entire carriage conveying apparatus 100 returns to its initial state.

Since the return path PH2 for circulating the push carriages 110 is formed immediately below the forward path PH1 for conveying the push carriages 110 from one work station to another, a circulating path fairly compact in plan view can be constructed. Accordingly, even in the case that the elevated carriage conveying apparatus 100 is connected with an unillustrated main conveyor in a branched manner to build a production line, a maximally compact layout of the carriage conveying apparatus 100 can be realized.

Further, since the return path PH2 is so inclined as to return the push carriages 110 by the action of gravity, the push carriages 110 on the return path PH2 can be automatically returned to the upstream side of the forward path PH1 without any consideration and without using any special driving source. Therefore, the operators can continuously do their works without being involved in the return of the push carriages 110.

The aforementioned embodiment is only an illustration of a preferred embodiment of the present invention, and the present invention is not limited thereto. Various design changes can be made without departing from the scope of the present invention.

(1) Even though the preferred embodiment was described with respect to manually pushed carriages, the invention is also applicable to (externally and/or internally) driven carriages.

As described above, quite a compact circulating path can be constructed, and the carriages can be automatically returned to the upstream side of the return path without using a special driving source. Thus, there is a significant effect of constructing an inexpensive elevating carriage conveying apparatus capable of efficiently circulating carriages even in a limited.

### LIST OF REFERENCE NUMERALS

- 100: elevated carriage conveying apparatus
- 110: carriage
- 120: forwarding elevated conveyor
- 121: elevating table
- 122: parallel link
- 123: air cylinder
- 140: returning elevated conveyor
- 141: elevating table
- 142: parallel link
- 143: air cylinder
- 170: control unit
- PH1: forward path
- PH2: return path
- S11, S21: upper presence sensor
- S12, S22: lower presence sensor
- S14, S24: elevated position sensor
- ST: work station

## Claims

1. A carriage conveying apparatus (100), comprising:
a forward path (PH1) for substantially linearly moving carriages (110) from one work station (ST) to another, and
a return path (PH2) for moving the carriages (110) from a downstream end of the forward path (PH1) to an upstream end thereof,
wherein the return path (PH2) is provided immediately below the forward path (PH1), the two paths (PH1, PH2) are connected by a pair of conveyors (120, 140) so that the carriages (110) can be transferred from one to the other of the two paths (PH1, PH2).

2. A carriage conveying apparatus according to claim 1, wherein the return path (PH2) is inclined such that the carriages (110) return from an upstream side of the return path (PH2) to a downstream side thereof at least partly by the action of gravity.

3. A carriage conveying apparatus according to one or more of the preceding claims, wherein the carriages (110) are conveyed from the upstream end of the forward path (PH1) to the downstream end thereof by being pushed by the operators (P).

4. A carriage conveying apparatus according to one or more of the preceding claims, wherein the pair of conveyors comprise:
elevating tables (121, 141) elevated and lowered between upper transfer positions where the carriages (110) can be transferred from and to the forward path (PH1) and lower transfer positions where the carriages (110) can be transferred from and to the return path (PH2), and
driving units (122, 123, 142, 143) for elevating and lowering the elevating tables (121, 141) between the upper and lower transfer positions.

5. A carriage conveying apparatus according to claim 4, further comprising one or more position detecting means (S11; S21; S12; S22) for detecting elevated and/or lowered positions of the elevating tables (110) in the corresponding transfer positions, and
a control unit (170) for controlling operations of the driving units (122, 123, 142, 143) in accordance with signals from the position detecting means (S11; S21; S12; S22).

6. A carriage conveying apparatus according to claim 5, wherein the control unit (170) permits the elevating table (141) provided at the upstream side of the return path (PH2) to be lowered only when the elevating table (121) provided at the downstream side of the return path (PH2) is located in the lower transfer position.

7. A carriage conveying apparatus according to claim 4, 5 or 6, wherein each driving unit (122, 123, 142, 143) comprises a parallel link (122, 142) for supporting the elevating table (121, 141) such that the elevating table (121, 141) can be elevated and lowered, and preferably a single air cylinder (123, 143) for driving the parallel link (122, 142).

8. A carriage conveying apparatus according to one or more of the preceding claims, wherein the conveyors (120; 140) comprise temporary holding means (124; 125; 145) for temporarily holding the carriage (110) positioned thereon substantially during the transfer from one to the other of the two paths (PH1, PH2).
